# EUROPÄISCHE PATENTANMELDUNG

(11) **EP 4 786 709 A1**
(43) Veröffentlichungstag der Anmeldung: **05.08.2026**
(21) Anmeldenummer: 25155250.1
(22) Anmeldetag: 31.01.2025
(51) Int. Cl.: E04H 6/02, B60L 53/302, B60L 53/31, B60L 53/60, H02S 20/30

(54) **STANDARDISIERUNG VON LADEINFRASTRUKTUR**

(71) Anmelder: LichtBlick eMobility GmbH, 97318 Kitzingen (DE)
(72) Erfinder: Schröder, Simon, 66271 Kleinblittersdorf (DE); Ewert, Sebastian, 70180 Stuttgart (DE)
(74) Vertreter: Eisenführ Speiser

(57) **Zusammenfassung**

Die Erfindung betrifft eine Ladeinfrastrukturvorrichtung für Elektrofahrzeuge. Die Vorrichtung umfasst eine modulare Ladeinfrastrukturvorrichtung, die mindestens eine erste Ladestation, einen Träger, der zur Aufnahme und Befestigung der mindestens ersten Ladestation ausgebildet ist und zur Aufnahme und Befestigung von elektrischen Bauteilen ausgebildet ist, ein Rahmenwerk und eine Überdachung mit mindestens einem Photovoltaikmodul umfasst. Die Erfindung betrifft auch ein Verfahren zur Installation einer modularen Ladeinfrastrukturvorrichtung für Elektrofahrzeuge. Erfindungsgemäß weist der Träger mindestens eine erste Transportschnittstelle auf, wobei auf und/oder innerhalb des Trägers eine Versorgungsnetzwerkschnittstelle angeordnet ist, der Träger einen Doppelboden aufweist, der Doppelboden zur Aufnahme einer Verkabelung ausgebildet ist, und das Rahmenwerk so ausgebildet ist, dass es auf dem Träger positionierbar ist und als Unterkonstruktion für die Überdachung dient.

## Beschreibung

Die Erfindung betrifft eine Ladeinfrastrukturvorrichtung für Elektrofahrzeuge. Die Vorrichtung umfasst eine modulare Ladeinfrastrukturvorrichtung, die mindestens eine erste Ladestation, einen Träger, der zur Aufnahme und Befestigung der mindestens ersten Ladestation ausgebildet ist und zur Aufnahme und Befestigung von elektrischen Bauteilen ausgebildet ist, ein Rahmenwerk und eine Überdachung mit mindestens einem Photovoltaikmodul umfasst. Die Erfindung betrifft auch ein Verfahren zur Installation einer modularen Ladeinfrastrukturvorrichtung für Elektrofahrzeuge.

Der Anteil an Elektrofahrzeugen in der EU nimmt zu. Es ist politisch gewollt, dass Elektrofahrzeuge die Verbrenner-Modelle ablösen. Ein Problem auf dem Weg zu flächendeckender Elektromobilität ist der Mangel an geeigneter Infrastruktur, insbesondere an Ladestationen, um die Batterien dieser Fahrzeuge aufladen zu können. Zu Ladeinfrastrukturen gehört neben der Ladestation selbst auch eine geeignete Ankopplung an das Stromnetz um die notwendige elektrische Energie zum Aufladen der Fahrzeugbatterien liefern zu können.

Üblicherweise werden Ladestationen fest an einem bestimmten Ort installiert. Die ortsfeste Installation erfordern im allgemeinen umfangreiche Bauarbeiten, einschließlich der Verlegung von Kabeln und der Errichtung von Fundamenten. Diese Installationsprozesse sind zeitaufwendig und kostenintensiv. Denn sie erfordern jeweils spezialisierte Bauarbeiten und umfangreiche Planungen.

US 2024/149725 A1 offenbart eine Ladestation der eingangs genannten Art. Sie beschreibt eine tragbare und eigenständige Ladestation für Elektrofahrzeuge. Die Station besteht aus einer Basisplatte, die als Standfläche und zur Aufnahme eines Fahrzeugs dient, einer Solaranlage zur Umwandlung von Sonnenenergie in Elektrizität, einer Säule zur Positionierung der Solaranlage über der Basisplatte und einem Verfolgungsmechanismus zur Neuausrichtung der Solaranlage. Die Vorrichtung ist modular und darauf ausgelegt, unabhängig von einem festen Stromnetz betrieben zu werden und kann daher schnell an beliebigen Orten aufgestellt werden, ohne dass ein Netzanschluss an das Stromnetz erfolgen muss.

In der Praxis gibt es deutlich zu wenige Ladestationen im Verhältnis zur stetig wachsenden Zahl an angemeldeten Elektrofahrzeugen. Der Ausbau der Ladeinfrastruktur wird zudem durch verschiedene Herausforderungen erschwert. Dazu gehören lange Planungs- und Genehmigungsprozesse, hohe Kosten für Tiefbauarbeiten sowie die Notwendigkeit, bestehende Verkehrs- und Stadtstrukturen möglichst wenig zu beeinträchtigen. Insbesondere in dicht besiedelten Gebieten stellt die Vermeidung größerer Baustellen eine zentrale Anforderung dar, um Verkehrsbehinderungen und zusätzliche Belastungen für Anwohner zu minimieren. Ein weiterer wichtiger Aspekt ist die zuverlässige Anbindung an das bestehende Stromnetz, die häufig zusätzliche infrastrukturelle Maßnahmen erforderlich macht.

Bisher bekannte Lösungen sind vor allem für den mobilen und autarken Einsatz gedacht. Sie setzen eine eigene Stromversorgung voraus. Der Betrieb von Ladestationen ausschließlich mit Solarstrom ist allerdings unzureichend, da die Energieproduktion stark von den Wetterbedingungen abhängt und Elektrofahrzeuge einen erheblichen Strombedarf zum Aufladen aufweisen. Dies führt dazu, dass bestehende Lösungen oft durch zusätzliche, kostenintensive Bauarbeiten an das Stromnetz angebunden werden müssen. Insbesondere in urbanen oder industriellen Gebieten mit hohem Ladebedarf erschwert dies einen schnellen und wirtschaftlichen Infrastrukturausbau.

Die Aufgabe der vorliegenden Erfindung besteht darin, eine Ladevorrichtung bereitzustellen, die diese bekannten Probleme löst und dazu beiträgt, den Infrastrukturausbau von Ladestationen zu vereinfachen und zu beschleunigen.

Erfindungsgemäß wird diese Aufgabe durch eine Ladestation der eingangs genannten Art gelöst, die dadurch gekennzeichnet ist, dass der Träger mindestens eine erste Transportschnittstelle aufweist, auf und/oder innerhalb des Trägers eine Versorgungsnetzwerkschnittstelle angeordnet ist, dass der Träger einen Doppelboden aufweist, der Doppelboden zur Aufnahme einer Verkabelung ausgebildet ist, und dass das Rahmenwerk so ausgebildet ist, dass es auf dem Träger positionierbar ist und als Unterkonstruktion für die Überdachung dient.

Ein wesentlicher Vorteil der Erfindung besteht darin, dass sie eine schnelle und unkomplizierte Lieferung und Installation der Ladeinfrastruktur ermöglicht und gleichzeitig eine zuverlässige Stromversorgung sicherstellt.

Die Transportschnittstellen, die am Träger angebracht sind, sind vorzugsweise als standardisierte Eckbeschläge nach der ISO-Norm 1161 ausgebildet. Diese Norm definiert die genauen Spezifikationen für Eckbeschläge, die sehr häufig in der Transportindustrie verwendet werden, um eine Verbindung zwischen verschiedenen Transporteinheiten herzustellen. Dies hat die Vorteile, dass der Träger der Ladeinfrastrukturvorrichtung problemlos mit gängigen Transportsystemen kompatibel ist, was die Logistik vereinfacht und die Kosten für den Transport reduziert. Die Träger können beispielsweise in einem Seecontainer gestapelt werden. Zudem sorgt die Standardisierung für eine erhöhte Sicherheit und Stabilität während des Transports, da die Verbindung zwischen den Transporteinheiten zuverlässig und stabil ist.

Die Versorgungsnetzwerkschnittstelle ist auf und/oder innerhalb des Trägers angeordnet und dient zur Verbindung der Ladeinfrastrukturvorrichtung mit einem externen Stromnetz. Durch die Versorgungsnetzwerkschnittstelle auf und/oder innerhalb des Trägers kann die Ladeinfrastruktur einfach und schnell an das Stromnetz angeschlossen werden. Durch den Anschluss an das Stromnetz wird eine stabile Stromversorgung der Ladeinfrastruktur sichergestellt.

Durch den Aufbau des Trägers mit einem Doppelboden, der bereits im Vorfeld mit den notwendigen Kabeln und elektrischen Bauteilen ausgestattet werden kann, entfallen zeitaufwendige Verkabelungsarbeiten vor Ort. Dies reduziert nicht nur den Aufwand für die Installation, sondern verkürzt auch die Inbetriebnahmezeit erheblich. Zudem ermöglicht der Doppelboden eine Nachrüstung und Wartung der Elektrik, da Verkabelungen und Anschlüsse leicht zugänglich bleiben. Darüber hinaus sorgt der Doppelboden des Trägers für eine geordnete und geschützte Unterbringung der Verkabelung und Elektrik. Die gesamte elektrische Infrastruktur ist in einem geschützten Bereich untergebracht, was das Risiko von Beschädigungen durch Umwelteinflüsse oder Vandalismus minimiert.

Das Rahmenwerk ist so dimensioniert und konstruiert, dass es auf dem Träger positioniert werden kann, der eine stabile Basis für die Überdachung bildet und ohne zusätzliche Stützen oder Träger auskommt und so den Fahrweg nicht beeinträchtigt. Die Erfindung ermöglicht es, die Träger mit den Ein- und Aufbauten fertig montiert an den Erfüllungsort zu liefern, sodass die Überdachung vor Ort durch einfache Schraubverbindungen an das Rahmenwerk montiert werden können, ohne dass umfangreiche Bauarbeiten erforderlich sind. In Verbindung mit der im Doppelboden vormontierten Verkabelung entfällt zudem die Notwendigkeit, nachträglich Kabelschächte auszuheben oder separate Leitungsführungen zu installieren. Da das Rahmenwerk als tragende Struktur der Überdachung fungiert und die Verkabelung bereits geschützt im Doppelboden untergebracht ist, kann die gesamte Ladeeinheit ohne weitere Eingriffe in den Untergrund aufgestellt werden. Diese Kombination aus vorgefertigten Komponenten und einfacher Montage vor Ort ermöglicht den Einsatz der Ladeinfrastruktur auch an Bereichen mit begrenzten Möglichkeiten für bauliche Maßnahmen.

Die Überdachung kann einfach auf dem Rahmen auf dem Träger montiert werden. Dies beseitigt die Notwendigkeit für zusätzliche Abstützungen oder Unterkonstruktionen für das Dach, die den Fahrzeugverkehr auf den Parkplätzen einschränken würden. Der Rahmen dient somit als Unterkonstruktion für ein Dach, das den Parkplatz des zu ladenden Fahrzeugs überdacht und dabei statisch auf Wind- und Schneelast ausgelegt ist. Das Dach dient dabei nicht nur dem Witterungsschutz der Endnutzer und Fahrzeuge, sondern ist auch mit Photovoltaik ausgestattet und kann zur Stromerzeugung genutzt werden.

Die Kombination von Überdachung und Photovoltaikmodulen nutzt zudem den verfügbaren Raum effizient, indem sie sowohl Schutz vor Witterungseinflüssen bietet als auch Energie erzeugt. Dies erhöht die Attraktivität der modularen Ladeinfrastruktur für Betreiber, die den Platz optimal nutzen möchten, der beispielsweise in Großstädten oft begrenzt und teuer ist. Der erzeugte Strom der Photovoltaikmodule ermöglicht beispielsweise eine Energieversorgung der elektrischen Komponenten die zum Betrieb der Ladestation erforderlich sind, beispielsweise Beleuchtung und Anzeigedisplay.

Die schnelle und einfache Installation der Vorrichtung ermöglicht zudem eine einfache Verlagerung der Ladeinfrastruktur. Dies kann besonders nützlich sein für temporäre Installationen oder in Gebieten, beispielsweise temporären Veranstaltungen wie Messen mit hohem Verkehrsaufkommen, in denen sich die Nachfrage nach Ladestationen schnell ändert. Beispielsweise kann sie auch in touristischen Gebieten während der Hauptsaison eingesetzt und anschließend an einen anderen Ort verlegt werden.

Diese elektrischen Bauteile, die auf dem Träger befestigt sind, sind beispielsweise Steuerungs- und/oder Regelungseinheiten, Sicherungseinheiten, Stromversorgungseinheiten oder ähnliche.

Es können je nach Bedarf eine oder mehrere Ladestationen an dem Träger angebracht werden. Ebenso kann die Größe und Ausgestaltung des Rahmenwerks und der Überdachung an die örtlichen Gegebenheiten angepasst werden.

Die Ladestationen, die in der modularen Ladeinfrastrukturvorrichtung eingebaut sind, sind nicht nur für den Einsatz mit elektrischen PKWs konzipiert, sondern auch für den Einsatz mit anderen elektrisch betriebenen Fahrzeugen, wie beispielsweise LKWs.

In einer bevorzugten Ausführungsform ist die modulare Ladeinfrastrukturvorrichtung so ausgestaltet, dass der Doppelboden in einem Einbauzustand mit Material verfüllt ist, sodass der verfüllte Doppelboden in einem Einbauzustand als Fundament für die Ladeinfrastrukturvorrichtung dient.

Somit hat der Doppelboden der Ladeinfrastrukturvorrichtung eine doppelte Funktion. Zum einen bietet er Platz für die vorinstallierten elektronischen Komponenten, sodass die Ladeinfrastrukturvorrichtung am Aufstellungsort nur noch an das Stromnetz angeschlossen werden muss, und zum anderen ist die Ladeinfrastrukturvorrichtung durch die Verfüllung des Doppelbodens mit Material sicher und stabil auf dem Untergrund positioniert, ohne dass zusätzliche Befestigungselemente oder Fundamente erforderlich sind, was die Installationszeit und die Installationskosten der Ladeinfrastrukturvorrichtung noch weiter verringert.

Die im Doppelboden verlegte Verkabelung ermöglicht eine vollständig geschützte Unterbringung der elektrischen Komponenten, ohne dass separate Kabelkanäle oder aufwendige Erdarbeiten erforderlich sind. Durch die anschließende Verfüllung des Doppelbodens mit geeignetem Material, das als Fundament dient, wird die Ladeinfrastruktur stabil aufgestellt, ohne dass ein herkömmliches Fundament errichtet werden muss. Diese Bauweise vereint die elektrische Installation und die statische Stabilität in einer einzigen Lösung, wodurch auf das Aufgraben des Bodens zur Kabelverlegung oder das Gießen von Fundamenten verzichtet werden kann.

Die Belastung, die das Fundament im Einbauzustand aushält, ist beispielsweise die Schnee- und/oder Windlast die auf die Überdachung trifft. Dies bedeutet, dass das Verfüllmaterial, das in den Doppelboden eingeführt wird, insbesondere so ausgewählt wird, dass es einer solchen Kraft standhält. Dies könnte beispielsweise durch die Auswahl eines Verfüllmaterials mit einer hohen Dichte und einer guten Beständigkeit gegenüber Umwelteinflüssen erreicht werden. Das Material, mit dem der Doppelboden verfüllt ist, ist beispielsweise Beton, Sand, Kies oder ein anderes geeignetes Material. Durch die Verfüllung des Doppelbodens mit Material wird eine hohe Stabilität und Standfestigkeit der Ladeinfrastrukturvorrichtung mit Überdachung erreicht. Gleichzeitig wird durch die Verfüllung des Doppelbodens eine einfache und kostengünstige Möglichkeit zur Errichtung eines Fundaments für die Ladeinfrastrukturvorrichtung mit Überdachung bereitgestellt.

In einer weiteren bevorzugten Ausführungsform ist die modulare Ladeinfrastrukturvorrichtung so ausgestaltet, dass das Rahmenwerk mindestens eine zweite Transportschnittstelle aufweist. Diese zweite Transportschnittstelle dient insbesondere dazu, das Rahmenwerk mit anderen Komponenten der Ladeinfrastrukturvorrichtung oder mit externen Geräten oder Modulen zu verbinden.

Die zweite Transportschnittstelle ist beispielsweise als standardisierter Eckbeschlag nach der ISO-Norm 1161 ausgebildet. Die zweite Transportschnittstelle ist beispielsweise dazu ausgebildet, das Rahmenwerk mit dem Träger der Ladeinfrastrukturvorrichtung zu verbinden. Darüber hinaus ist die zweite Transportschnittstelle beispielsweise dazu ausgebildet, das Rahmenwerk mit der Überdachung der Ladeinfrastrukturvorrichtung zu verbinden.

Dies ist besonders vorteilhaft, da die zweite Transportschnittstelle eine noch flexiblere Handhabung und Modularität der Ladeinfrastrukturvorrichtung ermöglicht. Sie erlaubt es, das Rahmenwerk einfach mit anderen Komponenten der Vorrichtung, sowie dem Träger oder der Überdachung zu verbinden, was den Transport und die Montage vereinfacht. Durch die Verwendung eines standardisierten Eckbeschlags nach der ISO-Norm 1161 wird eine Kompatibilität mit gängigen Transportsystemen sichergestellt, wodurch die Logistik vereinfacht und kostenreduziert wird.

In einer weiteren bevorzugten Ausführungsform ist der Träger als Palette ausgebildet, wobei die Grundfläche der Palette mit den Maßen einer Grundfläche eines 20 Fuß oder 40 Fuß Seecontainers dimensioniert ist.

Dieses ist besonders vorteilhaft, da die Dimensionierung des Trägers auf die Standardmaße eines 20 Fuß oder 40 Fuß Seecontainers eine einfache und kostengünstige Transport- und Lagerungslösung ermöglicht. Durch die Kompatibilität mit den gängigen Containergrößen können die Träger ohne besondere Anpassungen im internationalen Transport mit Standard Seecontainern eingesetzt werden, was den Versand vereinfacht.

In einer weiteren bevorzugten Ausführungsform ist die modulare Ladeinfrastrukturvorrichtung so ausgestaltet, dass die Überdachung so dimensioniert ist, dass sie eine Ladezone überdacht. Die Ladezone umfasst beispielsweise den Bereich, in dem die Fahrzeuge während des Ladevorgangs abgestellt werden. Die Ladezone ist demnach ein spezifischer Bereich, der für das Abstellen von Fahrzeugen während des Ladevorgangs vorgesehen ist, also der Ort, an dem das Fahrzeug, beispielsweise ein PKW während des Ladevorgangs steht.

Die Ladezone kann auch so gestaltet sein, dass sie zusätzliche Funktionen erfüllt. Beispielsweise kann sie mit Markierungen oder Schildern ausgestattet sein, die den Fahrern Anweisungen geben oder sie auf bestimmte Aspekte des Ladevorgangs hinweisen. Sie kann auch mit zusätzlichen Sicherheitsvorrichtungen ausgestattet sein, wie beispielsweise Barrieren oder Überwachungskameras.

Die Überdachung ist vorzugsweise so dimensioniert, dass sie die gesamte Ladezone oder einen Teil der Ladezone überdacht. Durch die Überdachung der Ladezone wird ein Schutz der Fahrzeuge und der Ladestationen vor Witterungseinflüssen wie Regen, Schnee oder Sonneneinstrahlung gewährleistet. Dies trägt dazu bei, die Lebensdauer der Ladestationen und der Fahrzeuge zu erhöhen und den Komfort für die Nutzer der Ladeinfrastrukturvorrichtung zu verbessern.

In einer weiteren bevorzugten Ausführungsform umfasst die modulare Ladeinfrastrukturvorrichtung eine Photovoltaikschnittstelle, die es ermöglicht, den erzeugten Strom entweder an die elektrischen Bauteile und/oder der Ladestation der Ladeinfrastrukturvorrichtung zu liefern und/oder in ein externes Stromnetz einzuspeisen. Diese Photovoltaikschnittstelle ist beispielsweise als Wechselrichter ausgebildet, der den von der Photovoltaikanlage erzeugten Gleichstrom in Wechselstrom umwandelt, der in das externe Stromnetz eingespeist werden kann.

Dies ist besonders vorteilhaft, da die Photovoltaikschnittstelle den erzeugten Solarstrom je nach Bedarf direkt an die elektrischen Bauteile oder die Ladestation weiterleiten kann. Gleichzeitig besteht die Möglichkeit, überschüssige Energie in das externe Stromnetz einzuspeisen, was eine zusätzliche Nutzung des erzeugten Stroms erlaubt. Durch die Umwandlung des Gleichstroms in Wechselstrom mit Hilfe des Wechselrichters wird sichergestellt, dass der Strom in der passenden Form zur Verfügung steht, egal ob er für den Betrieb der Ladeinfrastruktur oder zur Einspeisung ins Netz verwendet wird.

In einer weiteren bevorzugten Ausführungsform umfasst die modulare Ladeinfrastrukturvorrichtung vorzugsweise ein Kühlsystem, das vorzugsweise aus einem passiven Kühlsystem und/oder einer Belüftungsvorrichtung und/oder einem aktiven Kühlsystem zur Temperaturregulierung der elektrischen Bauteile besteht.

Das passive Kühlsystem besteht beispielsweise aus Wärmeleitmaterialien, die die Wärme von den elektrischen Bauteilen weg und zu kühleren Teilen der Ladeinfrastrukturvorrichtung hinleiten. Dies trägt insbesondere dazu bei, die Temperatur der elektrischen Bauteile zu senken und ihre Lebensdauer und Leistungsfähigkeit zu erhöhen.

Die Belüftungsvorrichtung dient insbesondere dazu, die Wärme von den elektrischen Bauteilen weg und aus der Ladeinfrastrukturvorrichtung hinaus zu leiten. Dies wird beispielsweise durch natürliche Konvektion oder durch den Einsatz von Ventilatoren oder ähnlichen Geräten erreicht.

Das aktive Kühlsystem besteht beispielsweise aus einem Kühlaggregat, das die Wärme von den elektrischen Bauteilen aufnimmt und an die Umgebung abgibt. Dies trägt insbesondere dazu bei, die Temperatur der elektrischen Bauteile auch bei hohen Umgebungstemperaturen oder bei intensiver Nutzung der Ladeinfrastrukturvorrichtung auf einem betriebsfähigen Niveau zu halten.

In einer weiteren bevorzugten Ausführungsform ist die modulare Ladeinfrastrukturvorrichtung so ausgestaltet, dass die Überdachung höhenverstellbar und/oder neigungsverstellbar am Rahmenwerk befestigt ist. Dies wird insbesondere durch teleskopartige Streben erreicht, die eine Höhenverstellung ermöglichen, und/oder durch ein Gelenk mit einem arretierbaren Mechanismus, der eine Neigungsverstellung ermöglicht.

Die Höhenverstellung der Überdachung trägt insbesondere dazu bei, die Höhe der Überdachung an die Größe der darunter abgestellten Fahrzeuge anzupassen. Die Neigungsverstellung der Überdachung trägt insbesondere dazu bei, die Neigung der Überdachung an die Position der Sonne anzupassen. Dies führt insbesondere zu einer erhöhten Effizienz der Photovoltaikmodule, indem sie so ausgerichtet werden, dass sie das einfallende Sonnenlicht optimal einfangen können.

Die teleskopartigen Streben und das Gelenk mit dem arretierbaren Mechanismus sind beispielsweise so ausgestaltet, dass sie eine einfache und schnelle Verstellung der Höhe und/oder der Neigung der Überdachung ermöglichen. Die Höhen- und Neigungsverstellbarkeit der Überdachung erfolgt beispielsweise automatisch. Die Höhen- und Neigungsverstellbarkeit der Überdachung kann auch manuell erfolgen, beispielsweise durch die Eingabe einer Bedienperson auf einem Display der modularen Ladeinfrastrukturvorrichtung oder der Bedienung eines Schalters.

In einer weiteren Ausführungsform umfassen die elektrischen Bauteile der modularen Ladeinfrastrukturvorrichtung vorzugsweise einen Mittelspannungstransformator, einen Batteriespeicher und/oder einen Wechselrichter.

Der Mittelspannungstransformator dient insbesondere dazu, die von der Photovoltaikanlage erzeugte elektrische Energie auf eine geeignete Spannungsebene zu transformieren, die für den Betrieb der elektrischen Bauteile und/oder der Ladestation geeignet ist.

Der Batteriespeicher dient insbesondere dazu, die von der Photovoltaikanlage erzeugte elektrische Energie zu speichern und bei Bedarf zur Verfügung zu stellen.

Der Wechselrichter dient insbesondere dazu, den von der Photovoltaikanlage erzeugten Gleichstrom in Wechselstrom umzuwandeln, der für den Betrieb der elektrischen Bauteile und/oder der Ladestation oder zur Einspeisung in das externe Stromnetz geeignet ist.

In einer weiteren bevorzugten Ausführungsform umfasst die modulare Ladeinfrastrukturvorrichtung vorzugsweise einen oder mehrere Sensoren zur Überwachung des Betriebszustands der elektrischen Bauteile und der Photovoltaikmodule. Diese Sensoren sind insbesondere über eine drahtlose Kommunikationsschnittstelle mit einer zentralen Steuereinheit zur Fernüberwachung und Fernwartung verbunden.

Die Sensoren können verschiedene Arten von Messdaten erfassen, wie beispielsweise die Temperatur, den Stromfluss, die Spannung oder den Energieverbrauch der elektrischen Bauteile und der Photovoltaikmodule. Diese Messdaten können an eine zentrale Steuereinheit übertragen werden, die sie analysieren und auswerten kann, um den Betriebszustand der Ladeinfrastrukturvorrichtung zu überwachen und gegebenenfalls notwendige Wartungs- oder Reparaturmaßnahmen zu initiieren. Die drahtlose Kommunikationsschnittstelle kann beispielsweise auf Basis von Funktechnologien wie WLAN, Bluetooth oder Mobilfunk arbeiten. Dies ermöglicht eine Datenübertragung zwischen den Sensoren und der zentralen Steuereinheit, auch über größere Entfernungen hinweg.

Die modulare Ladeinfrastrukturvorrichtung ist vorzugsweise mit verschiedenen Arten von Sensoren ausgestattet, um den Betriebszustand der elektrischen Bauteile und der Photovoltaikmodule zu überwachen. Diese Sensoren umfassen insbesondere Temperatursensoren, Stromsensoren und Spannungssensoren.

Temperatursensoren sind dafür verantwortlich, die Temperatur der elektrischen Bauteile und der Photovoltaikmodule zu überwachen. Sie können wichtige Informationen über die Betriebsbedingungen der Bauteile liefern und dazu beitragen, mögliche Überhitzungsprobleme zu erkennen, die zu Schäden oder Ausfällen führen könnten. Die von den Temperatursensoren erfassten Daten können an die zentrale Steuereinheit übertragen werden, die sie analysieren und auswerten kann, um den Betriebszustand der Ladeinfrastrukturvorrichtung zu überwachen und gegebenenfalls notwendige Wartungs- oder Reparaturmaßnahmen zu initiieren.

Stromsensoren können den Stromfluss durch die elektrischen Bauteile und die Photovoltaikmodule messen. Sie können dazu beitragen, den Energieverbrauch der Ladeinfrastrukturvorrichtung zu überwachen und zu optimieren und können dazu beitragen, mögliche Probleme mit der Spannungsversorgung zu erkennen.

Spannungssensoren können die Spannung der elektrischen Bauteile und der Photovoltaikmodule messen. Sie können dazu beitragen, den Betriebszustand der Bauteile zu überwachen und können dazu beitragen, mögliche Probleme mit der Ladeinfrastruktur und der Photovoltaikmodule frühzeitig zu erkennen.

In einem zweiten Aspekt umfasst die Erfindung auch ein Verfahren zur Installation einer modularen Ladeinfrastrukturvorrichtung. Das Verfahren umfasst die Schritte des Bereitstellens mindestens einer ersten Ladestation, eines Trägers mit einem Doppelboden und einer Versorgungsnetzwerkschnittstelle, eines Rahmenwerks und einer Überdachung, die mindestens ein Photovoltaikmodul enthält, das Anordnen und Befestigen der mindestens ersten Ladestation auf dem Träger, das Anordnen und Befestigen von elektrischen Bauteilen auf dem Träger, das Anschließen der mindestens ersten Ladestation an eine auf und/oder innerhalb des Trägers angeordnete Versorgungsnetzwerkschnittstelle, das Einbringen von Verfüllmaterial in den Träger, das Montieren des Rahmenwerks auf den Träger, wobei das Rahmenwerk an den vorgesehenen Bereichen, insbesondere an den Ecken des Trägers, positioniert und befestigt wird, das Montieren der Überdachung am Rahmenwerk, wobei das Rahmenwerk die Unterkonstruktion für die Überdachung ist, und wobei der verfüllte Träger als Fundament für die Ladeinfrastrukturvorrichtung mit montiertem Dach am Installationsort ausgebildet ist.

Das Verfahren ist besonders vorteilhaft, da es eine standardisierte und zeitsparende Installation der Ladeinfrastruktur ermöglicht, ohne dass eine aufwendige Koordination verschiedener Gewerke erforderlich ist. Durch die modulare Bauweise können viele Arbeitsschritte bereits im Vorfeld, beispielsweise im Produktionswerk durchgeführt werden, sodass vor Ort lediglich die Endmontage erfolgt. Dies reduziert die Planungs- und Abstimmungsaufwände erheblich und minimiert das Risiko von Verzögerungen oder Fehlern während der Installation. Die Vormontage der Module bietet eine planbare Inbetriebnahme, da die wesentlichen Komponenten bereits getestet und vorbereitet sind. Dies reduziert die Abhängigkeit von externen Elektrikern oder Netzbetreibern und beschleunigt den gesamten Prozess bis zur Betriebsbereitschaft der Ladestation.

Ein weiterer Vorteil besteht darin, dass der Träger mit seinem Doppelboden bereits werkseitig mit den notwendigen elektrischen Komponenten ausgestattet werden kann. Dies vermeidet aufwendige Tiefbauarbeiten zur Verlegung von Kabeln und stellt eine geordnete und geschützte Unterbringung der gesamten Verkabelung sicher. Dadurch entfällt die Notwendigkeit, den Netzanschluss an standortbedingte Gegebenheiten anzupassen, was die Installationszeit weiter verkürzt und potenzielle Fehlerquellen reduziert. Das Verfahren erlaubt zudem eine freie Standortwahl, da der verfüllte Träger als stabiles Fundament dient und keine zusätzlichen Betonfundamente oder Erdarbeiten erforderlich sind.

Die Reihenfolge der Schritte im Verfahren zur Installation der modularen Ladeinfrastrukturvorrichtung ist nicht strikt festgelegt. Dies bedeutet, dass die Schritte in einer anderen Reihenfolge ausgeführt werden können, als sie hier angegeben sind. Beispielsweise kann das Verfüllmaterial vor oder nach dem Anordnen und Befestigen der mindestens ersten Ladestation auf dem Träger eingeführt werden. Ebenso kann das Rahmenwerk vor oder nach dem Anschließen der mindestens ersten Ladestation an die auf und/oder innerhalb des Trägers angeordnete Versorgungsnetzwerkschnittstelle montiert werden.

In einer bevorzugten Ausführungsform des Verfahrens zur Installation einer modularen Ladeinfrastrukturvorrichtung umfasst das Verfahren weiterhin vorzugsweise die Schritte des Bereitstellens einer Photovoltaikschnittstelle, die es ermöglicht, den erzeugten Strom entweder an die elektrischen Bauteile und/oder die Ladestation der Ladeinfrastrukturvorrichtung zu liefern oder in ein externes Stromnetz einzuspeisen, des Anschließens des erzeugten Stroms an die elektrischen Bauteile und/oder die Ladestation der Ladeinfrastrukturvorrichtung oder an das externe Stromnetz, des Nutzens des erzeugten Stroms zur Versorgung der elektrischen Bauteile und/oder der Ladestation und/oder des Einspeisens des erzeugten Stroms in das externe Stromnetz.

Die Netzwerkschnittstelle ist dabei vorzugsweise so ausgelegt, dass sie eine sichere und zuverlässige Verbindung zwischen der Ladeinfrastrukturvorrichtung und dem externen Stromnetz ermöglicht. Sie umfasst beispielsweise einen Wechselrichter, der den von der Photovoltaikanlage erzeugten Gleichstrom in Wechselstrom umwandelt, der in das externe Stromnetz eingespeist werden kann.

Das Nutzen des erzeugten Stroms zur Versorgung der elektrischen Bauteile und/oder der Ladestation erfolgt beispielsweise durch das Einschalten der elektrischen Bauteile und/oder der Ladestation und das Zuführen des erzeugten Stroms zu diesen.

Das Einspeisen des erzeugten Stroms in das externe Stromnetz erfolgt beispielsweise durch das Verbinden der Netzwerkschnittstelle mit dem externen Stromnetz und das Zuführen des erzeugten Stroms zu diesem.

In einer bevorzugten Ausführungsform des Verfahrens zur Installation einer modularen Ladeinfrastrukturvorrichtung umfasst das Verfahren weiterhin vorzugsweise die Schritte des Bereitstellens mindestens einer weiteren Ladestation, des Anordnens und Befestigens der mindestens einen weiteren Ladestation auf dem Träger und des Anschließens der weiteren Ladestation an die Verkabelung und die Netzwerkschnittstelle. Die Bereitstellung mindestens einer weiteren Ladestation dient dazu, die Kapazität der Ladeinfrastrukturvorrichtung zu erhöhen und mehr Fahrzeugen gleichzeitig das Aufladen zu ermöglichen.

Das Anschließen der weiteren Ladestation an die Verkabelung des Trägers und die Netzwerkschnittstelle erfolgt beispielsweise durch das Verbinden der Strom- und Datenleitungen der Ladestation mit den entsprechenden Anschlüssen der Verkabelung und der Netzwerkschnittstelle.

In einer weiteren Ausführungsform des Verfahrens zur Installation einer modularen Ladeinfrastrukturvorrichtung umfasst das Verfahren weiterhin vorzugsweise die Schritte des Bereitstellens mindestens eines elektrischen Bauteils, insbesondere eines Mittelspannungstransformators und/oder eines Batteriespeichers und/oder eines Wechselrichters, des Anordnens und Befestigens des mindestens einen bereitgestellten elektrischen Bauteils auf und/oder innerhalb des und des Verkabelns der weiteren elektrischen Bauteile mit der auf und/oder innerhalb des Trägers angeordneten Verkabelung und der Netzwerkschnittstelle.

Das Bereitstellen mindestens eines elektrischen Bauteils dient insbesondere dazu, die Funktionalität und Leistungsfähigkeit der Ladeinfrastrukturvorrichtung zu erhöhen. Beispielsweise kann ein Mittelspannungstransformator dazu dienen, die von der Photovoltaikanlage erzeugte elektrische Energie auf eine geeignete Spannungsebene zu transformieren, die für den Betrieb der elektrischen Bauteile und/oder der Ladestation geeignet ist. Ein Batteriespeicher kann dazu dienen, die von der Photovoltaikanlage erzeugte elektrische Energie zu speichern und bei Bedarf zur Verfügung zu stellen. Ein Wechselrichter kann dazu dienen, den von der Photovoltaikanlage erzeugten Gleichstrom in Wechselstrom umzuwandeln, der für den Betrieb der elektrischen Bauteile und/oder der Ladestation oder zur Einspeisung in das externe Stromnetz geeignet ist.

In einer weiteren Ausführungsform des Verfahrens zur Installation einer modularen Ladeinfrastrukturvorrichtung umfasst das Verfahren weiterhin vorzugsweise die Schritte des Einstellens der Höhe und/oder der Neigung der Überdachung nach der Montage in eine Position und des Fixierens der Überdachung in der eingestellten Position.

Das Einstellen der Höhe und/oder der Neigung der Überdachung erfolgt beispielsweise durch das Verstellen von teleskopartigen Streben oder durch das Verstellen eines Gelenks mit einem arretierbaren Mechanismus. Das Einstellen der Höhe und/oder der Neigung der Überdachung erfolgt beispielsweise automatisch anhand von erfassten Sensordaten. Das Einstellen der Höhe und/oder der Neigung der Überdachung kann auch durch die manuelle Betätigung einer Bedienperson erfolgen, beispielsweise durch die Betätigung eines an der Ladestation angebrachten Displays oder eines Schalters.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Die Zeichnungen sind nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1: eine modulare Ladeinfrastrukturvorrichtung aus einer Seitenansicht; und
- Fig. 2: eine modulare Ladeinfrastrukturvorrichtung für zwei Fahrzeuge aus einer Ansicht von oben.

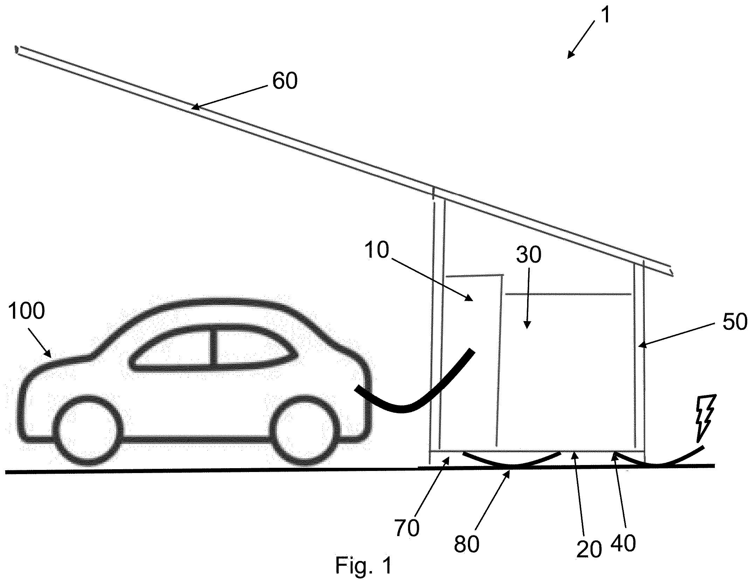

Fig. 1 zeigt eine modulare Ladeinfrastrukturvorrichtung 1 aus einer Seitenansicht. Eine Ladestation 10 ist dabei auf dem Träger 20 angeordnet. Der Träger 20 ist in diesem Ausführungsbeispiel eine Palette, der einen Doppelboden 70 hat. Auf der Palette ist zusätzlich zur Ladestation 10 ein elektrisches Bauteil 30 angeordnet, das die gesamten elektronischen Bauteile beinhaltet, die für den Betrieb der Ladeinfrastrukturvorrichtung 1 notwendig ist. In dem Doppelboden 70 ist eine Verkabelung 80 vorhanden, die die Ladestation 10 und das elektrische Bauteil 30 verbindet. Zudem ist im Doppelboden 70 eine Versorgungsnetzwerkschnittstelle 40 vorhanden, die an das Stromnetz angeschlossen und mit der Verkabelung 80 zusammengeschlossen ist, um so die Ladestation 10 und das elektrische Bauteil 30 der modularen Ladeinfrastrukturvorrichtung 1 mit Strom zu versorgen. Auf der Palette ist ein Rahmenwerk 50 befestigt. Dieses Rahmenwerk 50 ist eine Unterkonstruktion für die Überdachung 60, die eine Ladezone 90 überdacht. In der Ladezone 90 der modularen Ladeinfrastrukturvorrichtung 1 steht ein Fahrzeug 100, dass über die Ladestation 10 aufgeladen wird.

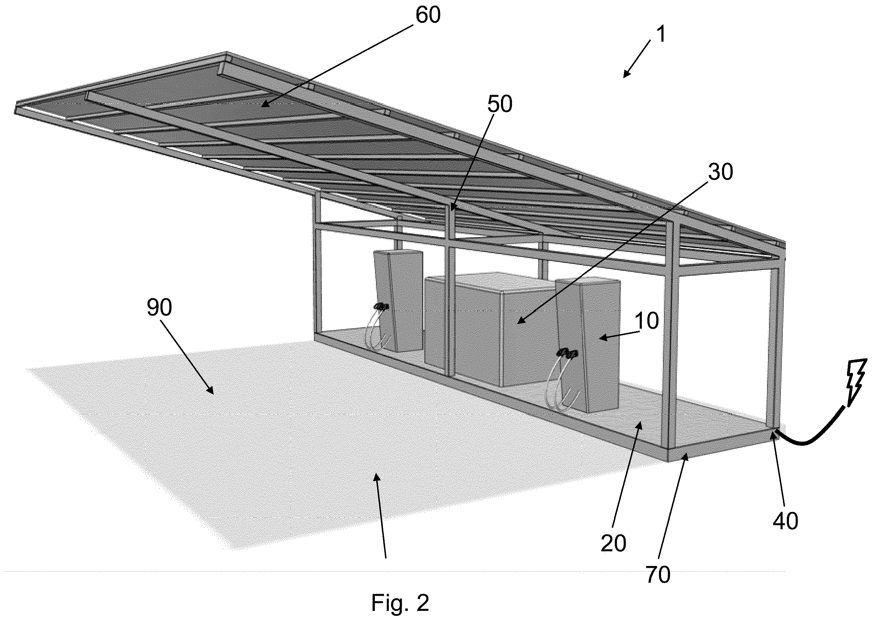

Fig. 2 zeigt eine modulare Ladeinfrastrukturvorrichtung 1 für zwei Fahrzeuge aus einer Ansicht von oben. In dieser Ausführungsform umfasst die Ladeinfrastrukturvorrichtung 1 zwei separate Ladestationen 10, die jeweils zwei Anschlüsse aufweisen, sodass bis zu vier Fahrzeuge gleichzeitig aufgeladen werden können. Die Ladeinfrastrukturvorrichtung 1 kann durch die modulare Bauweise problemlos erweitert werden. Weitere Trägereinheiten können seitlich oder in Reihe hinzugefügt werden, um die Kapazität je nach Bedarf zu erhöhen.

In der Mitte der Ladestationen 10 ist ein elektrisches Bauteil 30 angeordnet, in welcher sich Elektrik zum Betrieb der Ladestationen 10 befindet. Die Anordnung der Ladestationen 10 um ein zentrales elektrisches Bauteil 30 erlaubt eine optimale Nutzung der zur Verfügung stehenden Fläche.

Der Träger 20 ist in diesem Fall so dimensioniert, dass er den Standardmaßen eines 40- Fuß-Seecontainers entspricht. Durch die Einhaltung der Standardmaße eines 40- Fuß- Seecontainers kann die gesamte Ladeinfrastrukturvorrichtung 1 problemlos per LKW, Bahn oder Schiff transportiert werden, was den internationalen Einsatz erleichtert. Diese Konstruktion ermöglicht eine einfache Verladung und Stapelung mehrerer Einheiten für einen einfachen Transport.

Die gesamte Ladezone 90 wird von einer Überdachung 60 überdeckt, die auf dem Rahmenwerk 50 befestigt ist. Die Überdachung 60 überdeckt eine in etwa quadratische Fläche ab, die die Länge bzw. Breite eines 40-Fuß-Seecontainers hat, wodurch die Überdachung 60 eine Fläche von etwa 144 m² umfasst. Die Höhe der Überdachung 60 beträgt direkt über der Palette etwa 4 m und steigt in Richtung des äußeren Endes der Ladezone 90 auf etwa 5 m an. Die schräge Gestaltung der Überdachung 60 verbessert den Ablauf von Regenwasser und verhindert die Ansammlung von Schnee, was die statische Belastung reduziert.

Der Doppelboden 70 dieses Trägers 20 ist mit Verfüllmaterial verfüllt, sodass es der Überdachung 60 als Fundament dient. Beispielsweise ist das so hergestellte Fundament dazu ausgelegt Lasten zu tragen, die bei hohen Windstärken auftreten. Das Volumen der Palette mit den Breiten und Längen der Standardabmaße eines Seecontainers und einer Höhe von 0,25 m beträgt hier insgesamt etwa 7 m³. Mit einer typischen Dichte von etwa 2.400 kg/m³ ergibt die Verfüllung mit Beton ein Gesamtgewicht von ca. 16,8 Tonnen (7 m³ × 2.400 kg/m³). Bei Verfüllung mit trockenem Kies, der typischerweise eine Dichte von ca. 1.500 kg/m³ aufweist, ergibt sich ein Gesamtgewicht von 10,5 Tonnen. Beide Möglichkeiten sorgen daher für eine passende Standfestigkeit. Die Verfüllung mit Kies hat den Vorteil, dass die modulare Ladeinfrastrukturvorrichtung 1 leichter rückgebaut werden kann, um sie beispielsweise neu zu positionieren.

### Bezugszeichenliste

- 1: modulare Ladeinfrastrukturvorrichtung
- 10: Ladestation
- 20: Träger
- 30: elektrisches Bauteil
- 40: Versorgungsnetzwerkschnittstelle
- 50: Rahmenwerk
- 60: Überdachung
- 70: Doppelboden
- 80: Verkabelung
- 90: Ladezone
- 100: Fahrzeug

## Patentansprüche

1. Eine modulare Ladeinfrastrukturvorrichtung (1), umfassend:
- mindestens eine erste Ladestation (10),
- einen Träger (20),
o wobei der Träger (20) zur Aufnahme und Befestigung der mindestens ersten Ladestation (10) ausgebildet ist, und
o wobei der Träger (20) zur Aufnahme und Befestigung von elektrischen Bauteilen (30) ausgebildet ist, und
- ein Rahmenwerk (50),
- eine Überdachung (60) mit mindestens einem Photovoltaikmodul,
**dadurch gekennzeichnet, dass**
- der Träger (20) mindestens eine erste Transportschnittstelle aufweist, und
- auf und/oder innerhalb des Trägers eine Versorgungsnetzwerkschnittstelle (40) angeordnet ist, und
- der Träger (20) einen Doppelboden (70) aufweist, und
o der Doppelboden (70) zur Aufnahme einer Verkabelung (80) ausgebildet ist, und
- das Rahmenwerk (50) so ausgebildet ist, dass es auf dem Träger (20) positionierbar ist, und
- das Rahmenwerk (50) als Unterkonstruktion für die Überdachung (60) ausgebildet ist.

2. Ladeinfrastrukturvorrichtung (1) nach dem vorhergehenden Anspruch 1, wobei der Doppelboden (70) in einem Einbauzustand mit Material verfüllt ist, sodass der verfüllte Doppelboden (70) in einem Einbauzustand als Fundament für die Ladeinfrastrukturvorrichtung dient, insbesondere ist das Verfüllmaterial Beton und/oder Kies

3. Ladeinfrastrukturvorrichtung (1) nach einem der vorhergehenden Ansprüche, wobei das Rahmenwerk (50) mindestens eine zweite Transportschnittstelle aufweist.

4. Ladeinfrastrukturvorrichtung (1) nach einem der vorhergehenden Ansprüche, wobei der Träger (20) als Palette ausgebildet ist, wobei die Grundfläche der Palette mit den Maßen einer Grundfläche eines 20 Fuß oder 40 Fuß Seecontainers dimensioniert ist.

5. Ladeinfrastrukturvorrichtung (1) nach einem der vorhergehenden Ansprüche, wobei die Überdachung (60) so dimensioniert ist, dass sie eine Ladezone (90) überdacht.

6. Ladeinfrastrukturvorrichtung (1) nach einem der vorhergehenden Ansprüche, wobei die Vorrichtung weiterhin umfasst:
- eine Photovoltaikschnittstelle, die es ermöglicht, den erzeugten Strom von der Photovoltaikanlage entweder an die elektrischen Bauteile (30) und/oder die Ladestation (10) der Ladeinfrastrukturvorrichtung zu liefern und/oder in ein externes Stromnetz einzuspeisen.

7. Ladeinfrastrukturvorrichtung (1) nach einem der vorhergehenden Ansprüche, wobei die Vorrichtung weiterhin umfasst:
- ein Kühlsystem das aus einem passiven Kühlsystem und/oder einer Belüftungsvorrichtung und/oder einem aktiven Kühlsystem zur Temperaturregulierung der elektrischen Bauteile (30) besteht.

8. Ladeinfrastrukturvorrichtung (1) nach einem der vorhergehenden Ansprüche, wobei die Überdachung (60) höhenverstellbar und/oder neigungsverstellbar am Rahmenwerk (50) insbesondere durch teleskopartige Streben höhenverstellbar und/oder über ein Gelenk mit einem arretierbaren Mechanismus neigungsverstellbar befestigt ist.

9. Ladeinfrastrukturvorrichtung (1) nach einem der vorhergehenden Ansprüche, wobei die elektrischen Bauteile (30) einen Mittelspannungstransformator, einen Batteriespeicher und/oder einen Wechselrichter umfassen.

10. Ladeinfrastrukturvorrichtung (1) nach einem der vorhergehenden Ansprüche, wobei die Vorrichtung weiterhin umfasst:
- einen oder mehrere Sensor(en) zur Überwachung des Betriebszustands der elektrischen Bauteile (30) und/oder der Photovoltaikmodule, wobei
- der/die Sensor(en) insbesondere über eine drahtlose Kommunikationsschnittstelle mit einer zentralen Steuereinheit zur Fernüberwachung und/oder Fernwartung verbunden sind.

11. Verfahren zur Installation einer modularen Ladeinfrastrukturvorrichtung (1), umfassend die Schritte:
- Bereitstellen mindestens einer ersten Ladestation (10), und
- Bereitstellen eines Trägers (20) mit einem Doppelboden (70) und einer Versorgungsnetzwerkschnittstelle (40), und
- Bereitstellen eines Rahmenwerks (50), und
- Bereitstellen einer Überdachung (60), die mindestens ein Photovoltaikmodul enthält,
- Anordnen und Befestigen der mindestens ersten Ladestation (10) auf dem Träger (20),
- Anordnen und Befestigen von elektrischen Bauteilen (30) auf dem Träger (20),
- Anschließen der mindestens ersten Ladestation (10) an eine auf und/oder innerhalb des Trägers angeordnete Versorgungsnetzwerkschnittstelle (40),
- Einbringen von Verfüllmaterial in den Träger (20),
- Montieren des Rahmenwerks (50) auf den Träger (20), wobei das Rahmenwerk (50) an den vorgesehenen Bereichen, insbesondere an den Ecken des Trägers (20), positioniert und befestigt wird,
- Montieren der Überdachung (60) am Rahmenwerk (50),
o wobei das Rahmenwerk (50) die Unterkonstruktion für die Überdachung (60) ist, und
o wobei der verfüllte Träger (20) als Fundament für die Ladeinfrastrukturvorrichtung mit montiertem Dach am Installationsort ausgebildet ist.

12. Verfahren zur Installation einer modularen Ladeinfrastrukturvorrichtung (1) nach dem vorhergehenden Anspruch 11, wobei das Verfahren weiterhin die Schritte umfasst:
- Bereitstellen einer Photovoltaikschnittstelle, die es ermöglicht, den erzeugten Strom entweder an die elektrischen Bauteile (30) und/oder die Ladestation (10) der Ladeinfrastrukturvorrichtung zu liefern oder in ein externes Stromnetz einzuspeisen,
- Anschließen des erzeugten Stroms an die elektrischen Bauteile (30) und/oder die Ladestation (10) der Ladeinfrastrukturvorrichtung oder an das externe Stromnetz,
- Nutzen des erzeugten Stroms zur Versorgung der elektrischen Bauteile (30) und/oder der Ladestation (10) und/oder
- Einspeisen des erzeugten Stroms in das externe Stromnetz.

13. Verfahren zur Installation einer modularen Ladeinfrastrukturvorrichtung (1) nach einem der vorhergehenden Ansprüche 11-12, wobei das Verfahren weiterhin die Schritte umfasst:
- Bereitstellen mindestens einer weiteren Ladestation (10),
- Anordnen und Befestigen der mindestens einen weiteren Ladestation (10) auf dem Träger (20),
- Anschließen der weiteren Ladestation (10) an die Verkabelung (80) des Trägers (20) und die Netzwerkschnittstelle.

14. Verfahren zur Installation einer modularen Ladeinfrastrukturvorrichtung (1) nach einem der vorhergehenden Ansprüche 11-13, wobei das Verfahren weiterhin die Schritte umfasst:
- Bereitstellen mindestens eines elektrischen Bauteils, insbesondere eines Mittelspannungstransformators und/oder eines Batteriespeichers und/oder eines Wechselrichters,
- Anordnen und Befestigen des mindestens einen bereitgestellten elektrischen Bauteils (30) auf und/oder innerhalb des Trägers (20),
- Verkabeln der weiteren elektrischen Bauteile (30) mit der auf und/oder innerhalb des Trägers (20) angeordneten Verkabelung (80) und/oder der Netzwerkschnittstelle.

15. Verfahren zur Installation einer modularen Ladeinfrastrukturvorrichtung (1) nach einem der vorhergehenden Ansprüche 11-14, wobei das Verfahren weiterhin die Schritte umfasst:
- Einstellen der Höhe und/oder der Neigung der Überdachung (60) nach der Montage in eine Position,
- Fixieren der Überdachung (60) in der eingestellten Position.
